# EUROPÄISCHE PATENTSCHRIFT

(11) **EP 3 413 414 B1**
(45) Veröffentlichungstag und Bekanntmachung des Hinweises auf die Patenterteilung: **19.05.2021**
(21) Anmeldenummer: 18185838.2
(22) Anmeldetag: 23.06.2014
(51) Int. Cl.: H02G 3/06, F16L 21/00, F16L 39/00, H02G 15/013

(54) **DICHTUNGSMUFFE FÜR EINEN ROHRVERBAND**
SEALING SLEEVE FOR A PIPE ASSEMBLY
MANCHON D'ÉTANCHÉITÉ POUR UN FAISCEAU DE TUBES

(30) Priorität: 04.07.2013 DE 102013011184
(43) Veröffentlichungstag der Anmeldung: 12.12.2018
(62) Teilanmeldung aus: 14002146.0
(73) Patentinhaber: gabo Systemtechnik GmbH, 94559 Niederwinkling (DE)
(72) Erfinder: Lederer, Roland, 94374 Schwarzach (DE); Karl, Markus, 94327 Bogen (DE); Geiger, Alexander, 94559 Niederwinkling (DE)
(74) Vertreter: Schmid, Nils T.F.

(56) Entgegenhaltungen:
- EP-A1- 2 533 089
- EP-A2- 2 421 109
- WO-A1-00/46537
- WO-A1-2006/016239
- CN-A- 102 361 282
- DE-A1- 10 325 426
- DE-A1-102011 053 447
- JP-A- H06 288 495

## Beschreibung

Die Erfindung betrifft eine Dichtungsmuffe für einen Rohrverband, insbesondere ein Rohrverbanddichtungsendstück zum Abdichten des Rohrverbandendes.

Ein Rohrverband hat wenigstens zwei oder drei Innenrohre zum Aufnehmen von elektrischen Leitern, wie Kabeln, und eine flexible, die wenigstens zwei Innenrohre umgebende Umhüllung. Die flexible Umhüllung des abzudichtenden Rohrverbands kann entsprechend der Offenbarung von DE 10 2004 059 593 A1 ausgelegt sein, gemäß der die Umhüllung die Innenrohre derart lose hält, dass der Rohrverband unterschiedliche Querschnittsformen annehmen kann, um sich unterirdischen Verlegepositionen formanzupassen. Bei einem anderen Rohrverband kann die Umhüllung durch flexible Folien, wie Schrumpffolien, realisiert sein, die die Innenrohre nach dem Schrumpfvorgang fest gegeneinander verspannt.

Sämtliche der bekannten Rohrverbände haben gemein, dass sie in den wenigsten Fällen einen kreissymmetrischen Querschnitt aufweisen. Vielmehr sind kreisasymmetrische, wie polygonale Querschnitte bei Rohrverbänden in Gebrauch.

Aus DE 10 2012 104 920 A1 ist ein Rohrverbanddichtungsendstück bekannt, bei dem zwei, den Rohrverband umgebende, Muffenhalbschalen mittels einer Innen-Außengewindestruktur gegeneinander verklemmt werden. Die Muffenhalbschalen deformieren im montierten Zustand eine Einführöffnung und eine Rohraustrittsöffnung, an der die Innenrohre individuell und abgedichtet austreten sollen. Hierzu hat die bekannte Dichtungsmuffe einen scheibenförmigen Dichtstern mit einer Vielzahl von Bohrungen zur dichtenden Freigabe jedes einzelnen Innenrohrs. Der Dichtstern wird zwischen den Muffenhalbschalen eingeklemmt, um eine umlaufende, geschlossene Dichtfläche zu realisieren. Auf der Seite der Einführöffnung der Muffenhalbschalen weisen diese einen radial vorstehenden Ringsteg auf, der eine Dichtungsfunktion an der Einführöffnung bereitstellen soll. Es zeigte sich, dass das Rohrverbanddichtungsendstück an der Einführöffnung keine ausreichende Dichtigkeit gegenüber Gas und Flüssigkeit bereitstellen kann.

Es ist Aufgabe der Erfindung, die Nachteile des Stands der Technik zu überwinden, insbesondere eine Dichtungsmuffe für einen Rohrverband bereitzustellen, bei dem eine ausreichende Dichtungsfunktion sowohl an der Einführöffnung als auch an der Rohraustrittsöffnung gewährleistet ist.

Diese Aufgabe wird durch die Merkmale von Anspruch 1 gelöst.

Danach ist eine Dichtungsmuffe für einen Rohrverband mit wenigstens zwei Innenrohren zum Aufnehmen von elektrischen Leitern, wie Kabeln, und einer flexiblen, die wenigstens zwei Innenrohre umgebenden Umhüllung vorgesehen, die ein loses Halten der Innenrohre oder ein steifes Halten der Innenrohre mittels beispielsweise geschrumpften Folien realisieren kann. Die erfindungsgemäße Dichtungsmuffe hat wenigstens zwei, den Rohrverband umgreifende Muffenschalen, insbesondere Muffenhalbschalen. Die Muffenschalen begrenzen eine Einführöffnung für einen Rohrverband und eine Rohraustrittsöffnung für die jeweiligen Innenrohre. Die Dichtungsmuffe kann also dazu dienen, ein Ende der flexiblen Umhüllung gegen Außeneinflüsse abzudichten, wobei ein einzelner Zugriff auf die Innenrohre möglich ist, die von der flexiblen Umhüllung befreit axial an der Dichtungsmuffe einzeln austreten können. Die Muffenschalen können vorzugsweise als Halbschalen im Wesentlichen gleicher Gestalt ausgeführt sein. Des Weiteren hat die erfindungsgemäße Dichtungsmuffe eine in Längsrichtung der Dichtungsmuffe geteilte Dichtmatte, die entsprechend der Innenseite der jeweiligen Muffenschale ausgeführt sein kann. Im Falle von Muffenhalbschalen besteht die geteilte Dichtmatte aus zwei Dichtmattenhälften, die sich formkomplementär an der Innenfläche je einer Muffenhalbschale anschmiegen können. Des Weiteren hat die erfindungsgemäße Dichtungsmuffe eine Dichtungsscheibe zum Abdichten der Rohraustrittsöffnung. Die Dichtungsscheibe ist mit wenigstens zwei Durchgängen versehen, von denen jeder ein Innenrohr unter Ausbildung einer umlaufenden, geschlossenen Innenrohrdichtfläche aufnehmen kann. Die Dichtungsscheibe hat mindestens so viele Durchgänge wie der Rohrverband Innenrohre hält. Sind weniger Innenrohre als Durchgänge vorgesehen, so hat die Dichtungsscheibe einen in dem Durchgang eingesetzten Dichtungspfropfen zum Abdichten des jeweiligen Durchgangs.

Die Dichtungsscheibe ist vorzugsweise als separates Dichtungselement im Hinblick auf die Dichtmatte realisiert, kann allerdings auch in einem Stück mit der Dichtmatte realisiert sein. Dann bedarf es keiner äußeren Dichtfläche zwischen der Dichtungsscheibe und der Innenseite der Muffenschale. Die Dichtmatte und die Dichtungsscheibe sind vorzugsweise aus einem Elastomermaterial realisiert. Die erfindungsgemäße Dichtungsmuffe hat außerdem eine außen an den Muffenschalen anbringbare Klemmeinrichtung zum gegenseitigen Verspannen der Muffenschalen und zum radialen Andrücken der Dichtmatte gegen die Umhüllung des Rohrverbands. Erfindungsgemäß hat die Dichtmatte mehrere umlaufende, radial nach innen auf die Umhüllung erstreckende Ringwülste, die einführöffnungsseitig die Dichtungsmuffe abdichten sollen. Zwischen zwei Ringwülsten formt die Ringmatte außerdem eine umlaufende, insbesondere ununterbrochene Ringnut, die jeweils derart dimensioniert ist, dass beim Verspannen und Abdichten des Rohrverbands die sich elastisch verformenden Ringwülste in die Ringnut ausweichen können, so dass wenigstens eine umlaufende geschlossene Umhüllungsdichtfläche zwischen wenigstens einem der Ringwülste und der Umhüllung gebildet ist. Vorzugsweise sind insbesondere im verspannten Zustand der Dichtungsmuffe mehrere axial voneinander abgesetzte, geschlossen umlaufende Umhüllungsdichtflächen durch die mehreren Ringwülste gebildet. Es sei klar, dass eine Axialrichtung der Dichtungsmuffe vorzugsweise deren Längsrichtung und der Längsrichtung der Rohre und des Rohrverbunds übereinstimmt. Die Anordnung mehrerer Ringwülste mit einer dazwischen angeordneten Ringnut ermöglicht es, einen von einer zylindrischen Idealform abweichenden Rohrverband, wie im Querschnitt polygone oder elliptische Rohrverbände mit einer Dichtungsmuffe zu belegen, wobei einführöffnungsseitig auch bei unterschiedlich dimensionierten Rohrverbänden auch eine ausreichende Dichtigkeit gegen das Eindringen von Flüssigkeit und Gas in die Dichtungsmuffe verhindert wird.

Bei einer Weiterbildung der Erfindung ist eine Anordnung aus drei oder vier Ringwülsten an der Dichtmatte vorgesehen, die vorzugsweise axial voneinander abgesetzt sind und/oder die sich insbesondere von einer vorzugsweise zylindrischen Basisfläche der Ringnute radial nach innen erstrecken, insbesondere um vorzugsweise im verspannten Zustand jeweils eine geschlossen umlaufende Umhüllungsdichtfläche zu bilden, die mit dem Rohrverband abdichtend zusammenwirkt.

Sämtliche Basisflächen der Ringnute können den gleichen Radialabstand zur Muffenachse aufweisen. Auf diese Weise können unterschiedliche Radialhöhen der Ringwülste von der zylindrischen Basisfläche hin zum Rohrverband realisiert werden, wodurch unterschiedliche Anpressdrücke der Ringwülste gegen den Rohrverband bereitgestellt werden können. Auch auf diese Weise wird ein einführöffnungsseitiges Konzept bereitgestellt, das eine ausreichende Dichtungsfunktion auch bei unterschiedlich geformten Rohrverbänden ermöglicht.

Bei einer Weiterbildung der Erfindung haben die mehreren Ringwülste im Querschnitt eine Kegelstumpf- oder Trapezform. Zusätzlich oder alternativ können die mehreren Ringwülste eine von der Basisfläche gemessene Radialhöhe von wenigstens zwei Millimeter oder drei Millimeter, insbesondere zwischen zwei Millimeter und drei Millimeter, aufweisen. Vorzugsweise entspricht eine Axialbreite des Ringwulstes auf Höhe der Basisfläche im Wesentlichen dessen Radialhöhe. Zusätzlich oder alternativ kann die Axialbreite eines Ringwulstes auf Höhe der Basisfläche größer als dessen Radialhöhe sein.

Erfindungsgemäß haben die mehreren, insbesondere kreisförmigen Ringwülste zueinander unterschiedliche Radialabstände, wobei insbesondere ein einführungsnaher Ringwulst einen kleinsten Radialabstand und ein dichtungsscheibennaher Ringwulst einen größten Radialabstand aufweisen. Vorzugsweise ist der abmessungsgemäße Unterschied zwischen den allmählich zunehmenden Radialabständen höchstens ein Millimeter. Vorzugsweise haben ein einführöffnungsnaher Ringwulst einen kleinsten Radialabstand und ein dichtungsscheibennaher oder rohraustrittsöffnungsnaher Ringwulst einen größten Radialabstand zur Muffenachse.

Bei einer Weiterbildung der Erfindung umfassen zwei benachbarte, insbesondere dichtungsscheibennahe Ringwülste im unverformten Zustand - also wenn der Rohrverband nicht eingesetzt und verspannt ist - eine schmale zylindrische Umhüllungsdichtfläche von vorzugsweise weniger als drei Millimeter Axialbreite und zwei benachbarte, insbesondere einführungsöffnungsnahe Ringwülste im unverformten Zustand eine breite zylindrische Umhüllungsdichtfläche, an der wenigstens eine Dichtnase vorsteht. Die eine oder zwei Dichtnasen laufen vollständig um und sind im Querschnitt halbkreisförmig. Vorzugsweise können insbesondere auf einer vorzugsweise breiten Umhüllungsdichtfläche zwei Dichtnasen vorgesehen sein, die parallel zueinander verlaufen.

Bei einer Weiterbildung der Erfindung sind sämtliche Ringwülste derart zueinander angeordnet, dass deren Umhüllungsdichtflächen im Wesentlichen parallel zueinander und vorzugsweise konzentrisch zur Längsachse der Dichtungsmuffe umlaufen. Es sei klar, dass die Axialbreite eine Umhüllungsdichtfläche vorzugsweise im unbelegten, unvorgespannten Zustand, in Längsrichtung gemeint ist.

Vorzugsweise sind die Umhüllungsdichtflächen der Ringwülste in Axialrichtung mindestens so breit wie die Umhüllungsdichtfläche der Ringwulst, die in Längsrichtung der Dichtungsmuffe am weitesten von der Einführöffnung entfernt ist, wobei insbesondere die Umhüllungsdichtflächen einer ersten, zweiten oder dritten Ringwulst genauso breit oder breiter ist wie die Umhüllungsdichtfläche der jeweils in Längsrichtung benachbarten Ringwulst. Es sei klar, dass die Breite einer Umhüllungsdichtfläche zwischen deren radial umlaufenden Kanten in Längsrichtung zu bestimmen ist, wobei gegebenenfalls die axiale Breite von Dichtnasendichtflächen miteinzubeziehen ist. Vorzugsweise ist die axiale Breite einer Umhüllungsdichtfläche mindestens einer Ringwulst im Wesentlichen konstant und/oder zwischen zwei Millimetern und zehn Millimetern breit.

Bei einer bevorzugten Ausführung der Erfindung ist ein axialer Versatz zwischen zwei Umhüllungsdichtflächen, also zwischen deren radial umlaufenden Kanten in Längsrichtung, insbesondere mindestens so groß wie die kleineste axiale Breite der vorzugsweise benachbarten Umhüllungsdichtflächen. Insbesondere ist der axiale Versatz höchstens so groß wie die größte Breite der vorzugsweise benachbarten Umhüllungsdichtflächen. Auf diese Weise ist auch bei Rohrverbänden mit besonders großem oder stark polygonalen, von einer idealkreisform abweichenden Querschnitt eine Ausweichen der Ringwülste in die benachbarten Ringnuten gewährleistet.

Insbesondere ist die axiale Breite aller insbesondere unbelegten Umhüllungsdichtflächen und/oder der axiale Versatz aller Paare benachbarter insbesondere unbelegter Umhüllungsdichtfläche gleich groß. Insbesondere entspricht eine Axialbreite einer Umhüllungsdichtfläche einem angrenzenden Axialversatz.

Bei einer Weiterbildung der Erfindung formt die Dichtmatte axial an einem dichtungsscheibennahen Ringwulst anschließend einen insbesondere zylindrischen Dichtscheibensitz. In dem Dichtscheibensitz ist eine Dichtungsscheibe eingesetzt und wird beim Verspannen der Halbschalen verpresst. Vorzugsweise hat der insbesondere zylindrische Dichtscheibensitz einen größeren Radialabstand zur Muffenachse als eine insbesondere zylindrische Basisfläche der die Ringwulste trennenden Ringnute. Im gespannten Zustand bildet der vorzugsweise zylindrische Dichtscheibensitz eine geschlossene umlaufende Dichtscheibendichtfläche. Des Weiteren kann der Dichtscheibensitz durch den dichtungsscheibennahen Ringwulst einerseits und durch einen Radialinnenabsatz andererseits axial begrenzt sein.

Bei einer bevorzugten Ausführung der Erfindung gehen die mehreren Ringwülste an einer radialen Teilungsfläche der Dichtmatte absatzfrei und kontinuierlich über. Der Querschnitt des jeweiligen Ringwulstes bleibt in Umfangsrichtung im Wesentlichen gleich. Vorzugsweise haben zwei kooperierende Dichtmatten insbesondere spiegelsymmetrisch angeordnete Dichtungswülste oder Ringwülste, von denen je ein Paar im verpressten Zustand der Dichtungsmatte einen kontinuierlich umlaufenden Dichtwulstring ausbildet, dessen Innenumfangsfläche einen vorzugsweise konstanten Radius oder stufenfreien Verlauf aufweist.

Bei einer bevorzugten Ausführung der Erfindung hat die Dichtmatte an deren Außenseite, also an der dem Rohrverband abgewandten Seite, mehrere ringförmige Vorsprünge, die sich insbesondere parallel zueinander erstrecken und geschlossen sind oder unterbrechungsfrei einen Halbkreis beschreiben. Die Vorsprünge greifen in entsprechend geformte Ringaussparungen an der Innenseite der Muffenschalen ein.

Beim Verspannen der Muffenschalen mittels der Klemmeinrichtung, die vorzugsweise gewindefrei realisiert sein soll, werden neben der Dichtscheibe, die eine außenliegende Dichtfläche mit den Muffenschalen oder der Dichtmatte bildet und innenseitig jeweils umlaufende Dichtflächen mit den Innenrohren bildet, auch eine einführöffnungsseitige umlaufende Dichtungsfläche an wenigstem einem der Ringwülste realisiert, die sich an der Außenkontur des Rohrverbands elastisch anschmiegt, indem sich die Ringwülste deformieren und in die Ringnute ausweichen. Unterschiedliche Außenkonturen, die von der zylindrischen Idealform abweichen, können so ohne weiteres abgedichtet werden, wobei unterschiedliche Ringwülste für unterschiedlich dimensionierte Rohrverbände vorgesehen sind.

Die Klemmeinrichtung kann im Wesentlichen der vom deutschen Patent DE 198 49 941 C1 bekannten entsprechen.

Weitere Eigenschaften, Vorteile und Merkmale der Erfindung werden in den Unteransprüchen sowie in der folgenden Beschreibung bevorzugter Ausführungen der Erfindung anhand der beiliegenden Zeichnungen deutlich, in denen zeigen:
- Figur 1: eine Querschnittsansicht einer erfindungsgemäßen Dichtungsmuffe;
- Figur 2: einen Querschnitt durch eine Dichtmattenhalbschale;
- Figur 3: eine perspektivische Ansicht der Dichtmattenhalbschale gemäß Figur 2;
- Figur 4: eine Querschnittsansicht einer bevorzugten Ausführung einer Dichtungsmuffe mit einem großen abzudichtenden Rohrverband;
- Figur 5: eine Querschnittsansicht einer weiteren bevorzugten Ausführung einer Dichtungsmuffe mit einem kleinen Rohrverband; und
- Figuren 6 bis 15: verschiedene erfindungsgemäße Dichtungsmuffen mit unterschiedlichen Rohrverbänden in einer Vorderansicht mit Blick in Längsrichtung auf die Einführöffnung.

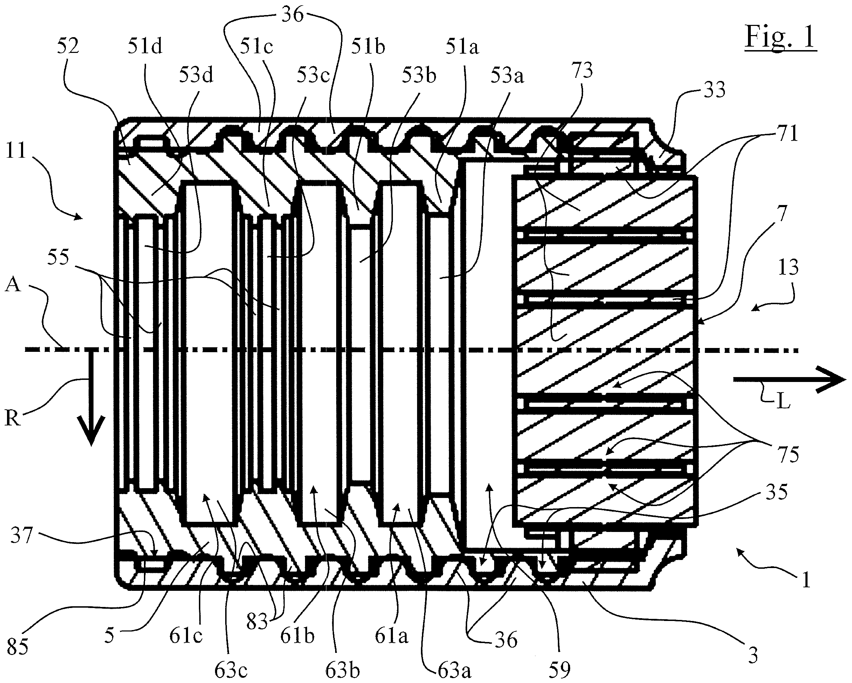

In den Figuren 1 bis 15 sind bevorzugte Ausführungen einer erfindungsgemäßen Dichtungsmuffe für einen Rohrverband mit wenigstens zwei Innenrohren zum Aufnehmen von elektrischen Leitern und einer flexiblen, die Innenrohre umgebenden Umhüllung gezeigt. Es sei zu verstehen, dass die einzelnen Rohre oder der gesamte Rohrverband mittels der Dichtungsmuffe gegenüber insbesondere einem Flüssigkeits- oder Gasdruck von wenigstens 1 bar, vorzugsweise mehr als 3 bar, insbesondere bis mindestens 10 bar frei von der Flüssigkeit oder dem Gas bleibt.

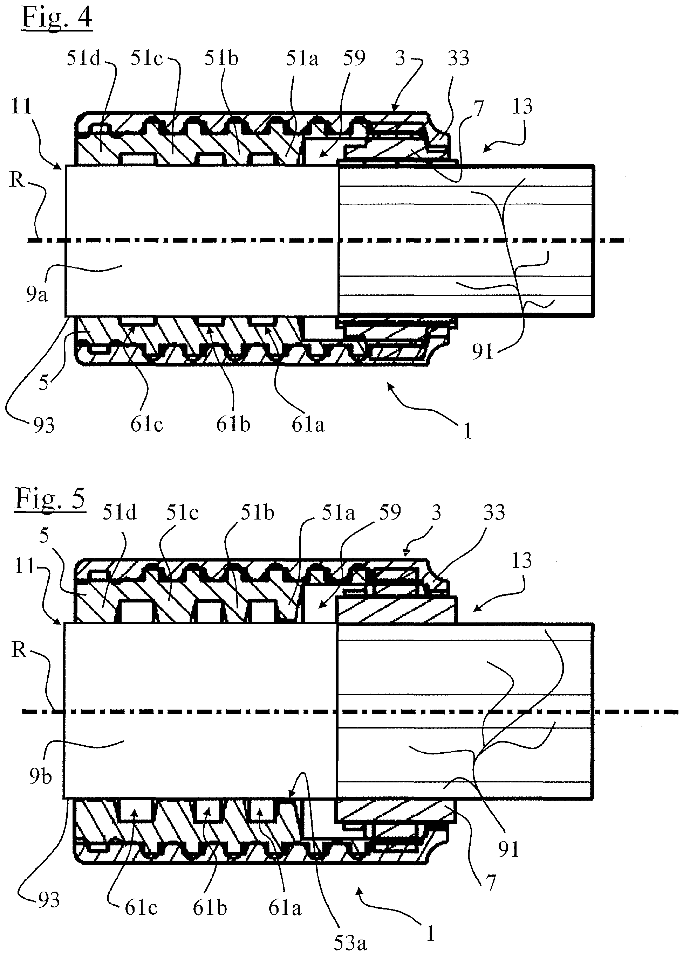

In den Figuren 1 bis 15 ist die erfindungsgemäße Dichtungsmuffe im Allgemeinen mit der Bezugsziffer 1 versehen, wobei in den Figuren 4, 5 und 7 bis 16 ein Rohrverband mit der Bezugsziffer 9 angedeutet ist. Ein Rohrverband 9 umfasst üblicherweise zwei, drei, vier, fünf, sechs oder mehr Rohre 91, die vorzugsweise zueinander parallel verlaufen, und eine Umhüllung oder Rohrhülle 93, die die Gesamtheit der individuellen Rohre 91 in Längsrichtung zumindest abschnittsweise, radial vollumfänglich umhüllt. Anders gesagt bildet die Rohrhülle 93 einen Schlauch um die einzelnen Rohre 91. Insbesondere ist jedes Rohr 91 innen- und außenseitig zylindrisch geformt.

Figur 1 zeigt im Querschnitt eine Dichtungsmuffe 1, die nicht mit einem Rohrverband belegt ist. Die Dichtungsmuffe 1 umfasst zwei zylinderhalbschalenförmige, vorzugsweise rotationssymmetrische baugleiche Muffenhalbschalen, zwei zylinderhalbschalenförmige, vorzugsweise spiegelsymmetrische oder baugleiche Dichtmatten 5 und eine zylindrische Dichtungsscheibe 7. Zwei zu einer Muffenschale 3 zusammengesetzte Muffenschalenhälften oder Muffenhalbschalen bilden einen Hohlzylinder, der eine Einführöffnung 11 und eine Rohraustrittsöffnung 13 hat, sodass in die Einführöffnung 11 ein Rohrverband eingelegt werden kann und die einzelnen Rohre aus der Rohraustrittsöffnung herausragen können. Die Muffenschale 3 hat rohraustrittsöffnungsseitig einen Radialinnenabsatz 33, der sich vom Außenumfang der Muffenschale in Richtung deren Muffenachse A erstreckt, einführöffnungsseitig eine rechteckige Ringaussparung 37 sowie dazwischen mehrere halbrunde Ringrippen 36, welche sich - weniger weit- ebenfalls in Radialrichtung R nach innen erstrecken und zwischen einander vorzugsweise sechs insbesondere gleich große Ringaussparungen 35 bilden.

Die Dichtmatte 5 ist in die Muffenschale 3 eingesetzt und hat vier Ringwülste 51 a, b, c und d, die sich in Radialrichtung R nach innen erstrecken. Zwischen je zwei benachbarten Ringwülsten 51 a, b, c und/oder d sind Ringnute 61 a, b und c ausgebildet. Die Ringwülste 51a bis d münden in Umhüllungsdichtflächen 53a bis d, die im Wesentlichen eine Zylinderform beschreiben. Eine Dichtmattenbasis 52 bildet einen zylinderringförmigen Abschnitt der Dichtmatte 5, in dem radialinnenseitig die Ringwülste 51a bis 51d angeordnet sind und an deren Außenseite vier der Ringvorsprünge 83 ausgebildet sind, die im Eingriff mit den Ringaussparungen 35 der Muffenschale 3 stehen. Am Grund der Ringnuten 61a bis c ist je eine Basisfläche 63a bis c ausgebildet. Die einführöffnungsseitige Endflächen der Muffenschale 3 und der Dichtmatte 5 geht vorzugsweise plan oder bündig ineinander über. Vom rohraustrittsöffnungsseitigen Ende der Dichtmattenbasis 52 aus erstreckt sich ein in Radialrichtung schmaler Teil der Dichtmatte 5 bis zum Radialinnenabsatz 33 der Muffenschale 3 und bildet einen vorzugsweise planzylindrischen Dichtscheibensitz 59.

Die in Längsrichtung L vorderen Ringwülste 51d und 51c, die am nächsten an der Einführöffnung 11 positioniert sind, haben vorzugsweise je zwei Dichtnasen 55, welche sich ausgehend von der jeweiligen Umhüllungsdichtfläche 53d, 53c in Radialrichtung R auf die Muffenachse A zu erstrecken. Im Querschnitt sind die Ringwülste 51a bis d kegelstumpf- oder trapezförmig, wobei insbesondere die einführöffnungsseitige Außenfläche des Ringwulstes 51d in einer Ebene senkrecht zur Muffenachse A verläuft und nur die übrigen sich in Radialrichtung erstreckenden Außenseiten der Ringwülste 51a bis 51d schräg zur Radialrichtung R verlaufen. Die beiden hinteren Ringwülste 51a und 51b, die am nächsten an der Rohraustrittsöffnung 13 der Muffenschale 3 positioniert sind, haben einen axial schmaleren Querschnitt als die beiden anderen Ringwülste 51c und 51d.

Die Dichtmatte 5 ist derart eingesetzt, dass eine im Wesentlichen zylindrische Dichtmattenaußenseite 85 am einführungsöffnungsseitigen Ende der Dichtmatte 5 auf axialer Höhe eines vordersten Dichtwulstes oder Ringwulstes 51d über der rechteckigen Ringaussparung 37 der Muffenschale 3 sitzt und das andere Ende der Dichtmatte 5 gegen den Radialinnenabsatz 33 der Muffenschale 3 stößt. Die ringförmigen Vorsprünge 83 stehen in Radialrichtung R von der Dichtmattenaußenseite 85 nach außen um vorzugsweise ein bis zu drei Millimeter vor.

Die im Wesentlichen zylindrische Dichtungsscheibe 7 wird zwischen den Dichtscheibensitzen 59 zweier gegenüber liegender Dichtmatten 5 verspannt und stößt in einer zur Muffenachse A parallelen Längsrichtung L gegen den Radialinnenabsatz 33 der Muffenschale 3.

Die Dichtungsscheibe 7 umfasst eine Dichtungsscheibenbasishülse 71, die den Außenumfang der Dichtungsscheibe 7 definiert und in welcher Dichtungsscheibenbasishülse 71 eine Anzahl von Dichtungsscheibenpfropfen 73 sitzt, die der Maximalanzahl der Rohre eines Rohrverbands (nicht dargestellt) entsprechen. Die Dichtungsscheibenpfropfen 73 sind zylindrisch und einstückig mit der Dichtungsscheibenbasishülse 71 ausgebildet und können manuell entfernt werden, insbesondere durch das Zerstören von Sollbruchstellen 75 herausgerissen werden, um eine im Wesentlichen zylindrische und parallel zur Achse der Dichtungsscheibe 7 verlaufende Öffnung für ein Rohr zu bilden.

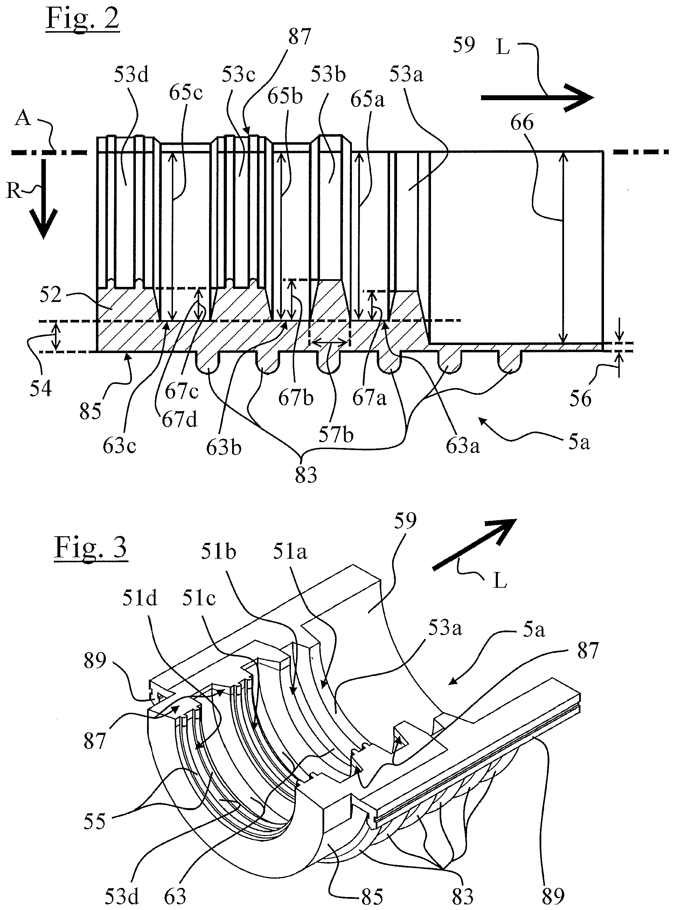

Figur 2 zeigte einen Querschnitt durch eine Dichtmattenhalbschale 5a. Die Dichtmattenhalbschale 5a ist im Wesentlichen zylinderhalbschalenförmig und hat einen Dichtmattenbasisabschnitt 52 mit einer ersten, relativ großen Wandstärke 54 zwischen Dichtmattenaußenseite 85 und Ringnutbasisfläche 63 und einen Dichtscheibenabschnitt mit einer zweiten, schmaleren Wandstärke 56 zwischen Dichtscheibensitzfläche 59 und Dichtmattenaußenseite 85. An der Dichtmattenaußenseite 85 sind vorzugsweise insgesamt sechs Ringvorsprünge 83 ausgebildet, die sich entlang des Halbschalenaußenumfangs der Dichtmattenaußenseite 85 erstrecken.

Der Radialabstand 65a, b, c von der Muffenachse A zu den Basisflächen 63a, b und c ist in Figur 2 für alle Basisflächen 63 gleich groß. Ausgehend von einer benachbarten Basisfläche 63 ragt jeder Ringwulst 51a, b, c, d in Radialrichtung um eine vorzugsweise gleich große Radialhöhe 67a, b, c oder d in Richtung der Muffenachse A.

Bei der in Figur 2 dargestellten Ausführung ist die Radialhöhe 67a des in Längsrichtung L hintersten Ringwulstes 53 a am geringsten und die Radialhöhe 67b des Ringwulstes 51b, der einführungsöffnungsseitig des Ringwulstes 51a diesem benachbart angeordnet ist, am größten. Die Axialbreite (nicht dargestellt) des Ringwulstes 51a auf radialer Höhe der Basisfläche 63c des vordersten Ringwulstes 51 d ist größer als dessen Radialhöhe 67d und die Axialbreite (nicht dargestellt) des hintersten Ringwulstes 61a entspricht im Wesentlichen dessen Radialhöhe 67a. Selbstverständlich ist die Radialhöhe der Umhüllungsdichtfläche 53a des Ringwulstes 51a bezüglich des benachbarten Dichtungsscheibensitzes 59 größer als dessen Radialhöhe 67a, da die Dichtmattenbasis 52 eine größere Wandstärke 54 hat, als die Wandstärke des Dichtscheibensitzabschnitts. Die größte Radialhöhe 67b, insbesondere größer als dessen Axialbreite 57b, hat vorzugsweise der in Längsrichtung L vorletzte Ringwulst 51b.

Der trapezförmige Querschnitt der Ringwülste 51, der zwischen deren basisflächenseitigen Fuß, deren Umhüllungsdichtfläche 53 und deren beiden längsrichtungsseitigen Außenflächen gebildet wird, ist in Figur 2 besonders deutlich.

Vorzugsweise erstreckt sich der Innenumfang der Umhüllungsdichtflächen 53b, 53c und 53d und der Ringnuten 61b und 61c über mehr als 180°, so dass sich in Tangentialrichtung insbesondere im Bereich des einführungsöffnungsseitigen Endes der Dichtmatte 5 bis hin zum zweiten oder dritten Ringwulst 51c oder 51b eine tangentiale Erhebung 87 ergibt. Die tangentiale Erhebung 87 an den Umfangsenden einer Dichtmattenhalbschale 5a sorgt dafür, dass die Dichtmattenhalbschale 5a mit der gegenüberliegenden Dichtmattenhalbschale (nicht dargestellt), die keine, eine oder zwei tangentiale Erhebungen haben kann, verpresst wird, so dass das einführöffnungsseitige Ende der Dichtungsmuffe 1 besonders gut abdichtet.

Figur 3 ist eine perspektivische Ansicht der Dichtmatte 5a von Figur 2. Die Dichtmatte 5a hat an der Außenseite 85 sechs Ringvorsprünge 83, die in Längsrichtung L parallel zueinander angeordnet sind. An den tangentialen Endabschnitten der Dichtmattenhalbschale 5a erstrecken sich in radialer Richtung nach außen vorzugsweise an beiden gegenüberliegenden Seiten Längsrippen 89, die sich im Wesentlichen über die gesamte Länge der Dichtmattenhalbschale 5a erstrecken und insbesondere nur die Axialbreite des einführungsöffnungsseitigen Ringwulstes 51d zumindest teilweise freilassen.

An den Endabschnitten der Dichtscheibenmatte 5a sind bei der bevorzugten Ausführungsform diametral gegenüberliegend tangentiale Erhebungen 87 an den drei vorderen Ringwülsten 51 b, c und d angeordnet. Durch die keilförmige tangentiale Erhebung 87 der Dichtmatte 5, die radial nach außen hin verschwindet, wird an den Kontaktflächen der drei vorderen Ringwülste 51b, c und d eine erhöhte Komprimierung und damit eine verstärkte Verspannung in Tangentialrichtung erzeugt, wenn zwei Dichtmattenhalbschalen miteinander verpresst werden. Dadurch kann sichergestellt werden, dass auch entlang einer Kontaktfläche zwischen zwei Dichtmatten keine Leckage entsteht. Die radiale Länge des Keils kann vorzugsweise der Radialbreite der Dichtmattenaußenseite 85 entsprechen, kleiner sein als der Dichtmatten-Außenseitenradius oder im Wesentlichen genau so groß sein. Insbesondere erstreckt sich die tangentiale Erhebung 87 in Längsrichtung nur über den ersten, zweiten und/oder dritten Ringwulst 51d, c und/oder 51b.

Figur 4 zeigt eine erfindungsgemäße Dichtungsmuffe 1 mit eingelegtem Rohrverband 9a. Aus der Dichtungsscheibe 7 wurden mehrere Dichtungsscheibenpfropfen (nicht dargestellt) entfernt, um Rohre 91 des den Rohrverbands 9a durch die dadurch gebildeten Öffnung zu verlegen. Der Rohrverband 9a erstreckt sich durch die Dichtungsmuffe 1 bis maximal zur Dichtscheibe 7 und einführungsöffnungsseitig darüber hinaus. Durch die Dichtscheibe 7 und die Rohraustrittsöffnung 13 erstrecken sich die einzelnen Rohre 91. Die Dichtungsscheibe 7 kann zwei oder mehr Öffnungen für die Rohre 91 des Rohrverbands 9 haben.

Die Querschnittsfläche eines Rohrverbands 9a ist größer als der Öffnungsquerschnitt zumindest eines der Ringwülste 51a bis d, so dass das Einführen des Rohrverbands 9a in die Dichtungsmuffe 1 ein radiales Verspannen der Ringwülste 51 mit der Dichtmatte 5 zwischen der Muffenschale 3 und dem Rohrverband 9a bewirkt. Also ist die Dichtmatte 5, insbesondere deren Ringwülste 51, verhältnismäßig elastisch und Muffenschale und Rohrverband sind verhältnismäßig starr. Aufgrund der radialen Vorspannung der Ringwülste 51 schmiegt sich zumindest ein Ringwulst, vorzugsweise alle Ringwülste 51 abdichtend an die Hülle 93 des Rohrverbands 9a. Vorzugsweise bildet die erfindungsgemäße Dichtungsmuffe 1 durch die erste Abdichtung mit der Dichtmatte 5 gegenüber dem Rohrverband 9a und die weitere Abdichtung der Dichtungsscheibe 7 gegenüber den einzelnen Rohren 91 einen besonders verlässlichen Schutz gegen das Eindringen von Wasser oder Gas.

Zwischen je zwei benachbarten Ringwülsten 51 ist eine Ringnut 61 angeordnet, so dass die Ringwülste 51 unter radialer Vorspannung in Längsrichtung L in eine benachbarte Ringnut 61 ausweichen können (nicht dargestellt).

Figur 5 zeigt ebenfalls eine Dichtungsmuffe 1 mit eingelegtem Rohrverband 9b. Der in Figur 4 dargestellte Rohrverband 9a hatte in dem gezeigten Querschnitt einen kleineren Durchmesser als der Rohrverband 9b in Figur 5. Die radiale Verspannung der Dichtmatte 5 zwischen dem Rohrverband 9a und der Muffenschale 3 ist in Figur 4 demnach kleiner als die radiale Vorspannung bei der bevorzugten Ausführung, die in Figur 5 dargestellt ist, aber dennoch ausreichend zum Abdichten. In Figur 5 ist die Umhüllungsdichtfläche 53a des hinteren Ringwulstes 51a frei, im Gegensatz zu den übrigen in Figur 4 und 5 gezeigten Umhüllungsdichtflächen, die im abdichtenden Kontakt mit der Hülle 93 des Rohrverbands stehen, da der Außenradius des Rohrverbands 9b geringer ist als der lichte Innenradius des Ringwulstes 51a, welcher größer ist als die lichten Innenradien der Ringwülste 51b bis 51d.

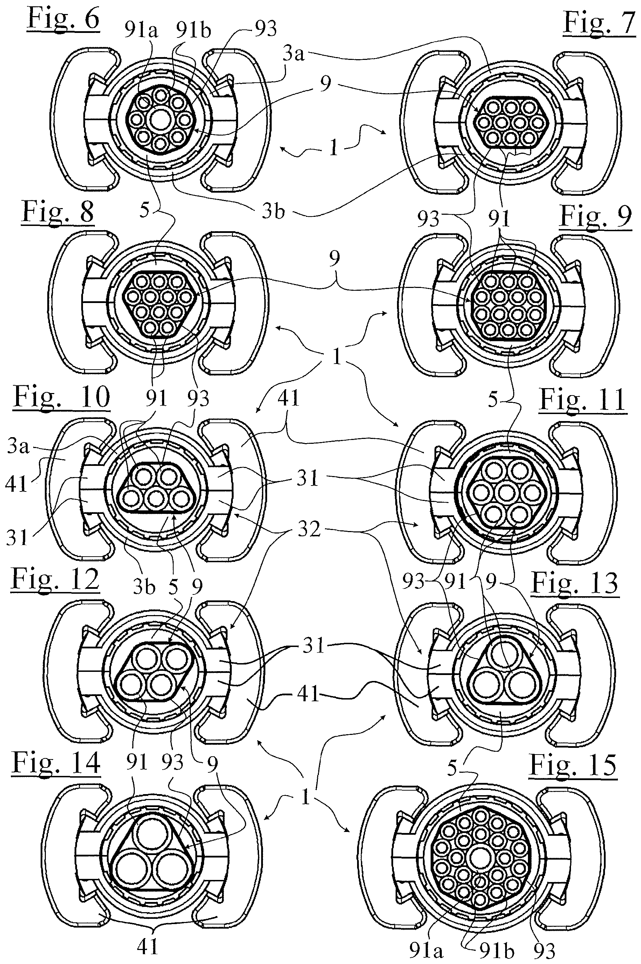

Die Figuren 6 bis 15 zeigen unterschiedliche bevorzugte Ausführungen einer erfindungsgemäßen Dichtungsmuffe 1 mit unterschiedlichen Rohrverbunden 9. Der Querschnitt eines Rohrverbands 9 ist vorzugsweise polygonal mit abgerundeten Ecken, da insbesondere alle Rohre 91 zylindrische Innen- und Außendurchmesser haben. Wie in den Figuren 6 und 15 dargestellt, kann ein Rohrverband kleinere Rohre 91b und größere Rohre 91a umfassen. Vorzugsweise umfasst ein Rohrverband 9 nur ein großes Rohr 91a, das umfänglich von mehreren, insbesondere sieben oder acht kleineren Rohren 91b geringeren Außendurchmessers umgeben ist. Der Außenumfang eines Rohrverbands 9 ist durch eine Rohrverbandumhüllung oder Rohrhülle 93 definiert.

Die Wandstärke der Umhüllung oder Rohrhülle 93 ist vorzugsweise kleiner als die Wandstärke eines Rohrs 91, insbesondere kleiner als die Hälfte der Wandstärke eines Rohres und vorzugsweise größer als ein Zehntel der Wandstärke eines Rohres. Alle Rohre 91 sind in Radialrichtung von ein- und derselben Umhüllung oder Rohrhülle 93 umgeben. Zwischen den einzelnen Rohren 91 untereinander und zwischen den Rohren 91 und der Rohrhülle 93 können Hohlräume gebildet sein.

Die in den Figuren 6 bis 15 dargestellten Rohrverbände 9 sind radial von einer Dichtmatte 5 umfasst. Zwei Muffenhalbschalen 3a, 3b umfassen radial die Dichtmatte 5, die den Rohrverband abdichtend aufnimmt.

Spiegelsymmetrisch zu der Kontaktfläche der Muffenhalbschalen 3 a, b sind an deren Endabschnitten radial außenseitig jeweils ein Keilflügel 31 ausgebildet. An einander gegenüber liegenden Kontaktflächen zweier Keilflügel 31 sind (nicht dargestellt) Nuten für die Längsrippen (nicht dargestellt, vergleiche Figur 3) der Dichtmattenhalbschale 5a gebildet.

Durch kooperierende Keilflügel 31 einer oberen Muffenhalbschale 3a und einer unteren Muffenhalbschale 3b wird je ein Schwalbenschwanz 32 realisiert, auf den in oder entgegen der Längsrichtung eine Schwalbenschwanzführung 41 aufgeschoben werden kann, um die Muffenhalbschalen 3 und die darin angeordneten Dichtmatten 5 und die Dichtungsscheibe 7 radial zu verpressen. Die Keilflügel 31 der Muffenhalbschalen 3a, 3b realisieren so zusammen mit der Schwalbenschwanzführung 41 eine Klemmeinrichtung.

Um eine verhältnismäßig größte Radialverpressung im Bereich der einführungsöffnungsseitigen Ringwülste 51d und 51c zu bewirken, vergrößert sich die Breite des Schwalbenschwanzes im Verlauf einer Muffenschale entgegen der Längsrichtung L, so dass ein breitester Abschnitt des Schwalbenschwanz 32 am oder nahe dem einführungsöffnungsseitigen Ende der Muffenschale 3 vorliegt.

Der Rohrverbandquerschnitt kann eine abgerundete Polygonform haben und beispielsweise als gleichschenkliges Dreieck (Figs. 13 und 14), eine Raute (Fig. 12), ein Trapez (Fig. 10), ein Sechseck mit gleichen (Fig. 11) oder zwei unterschiedlichen Schenkellängen (Figs. 7 und 8) oder ein Achteck, ebenfalls mit gleichen (Fig. 6) oder unterschiedlichen Schenkellängen (Fig. 9) realisieren.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Dichtungsmuffe
- 3: Muffenschale
- 3 a, b: Muffenschalenhälfte
- 5: Dichtmatte
- 5a: Dichtmattenhalbschale
- 7: Dichtungsscheibe
- 9, 9a, 9b: Rohrverbund
- 11: Einführöffnung
- 13: Rohraustrittsöffnung
- 31: Keilflügel
- 32: Schwalbenschwanz
- 33: Radialinnenabsatz
- 35: Ringaussparung
- 36: Ringrippe
- 37: rechteckige Ringaussparung
- 41: Schwalbenschwanzaufnahme
- 51 a, b, c, d: Ringwulst
- 52: Dichtmattenbasis
- 53 a, b, c, d: Umhüllungsdichtfläche
- 54: Wandstärke (Dichtmattenbasis)
- 55: Dichtnase
- 56: Wandstärke (Dichtscheibensitz)
- 57 a, b, c, d: Axialbreite
- 59: Dichtscheibensitz
- 61 a, b, c: Ringnut
- 63 a, b, c: Basisfläche
- 65 a, b, c: Radialabstand
- 66: Radialabstand
- 67 a, b, c, d: Radialhöhe
- 71: Dichtscheibenbasishülse
- 73: Dichtscheibenpfropfen
- 75: Sollbruchstellen
- 83: Ringvorsprung
- 85: Dichtmattenaußenseite
- 87: tangentiale Erhebung
- 89: Längsrippe
- 91: Rohr
- 91 a: großes Rohr
- 91 b: kleines Rohr
- 93: Rohrhülle
- A: Muffenachse
- L: Längsrichtung
- R: Radialrichtung

## Patentansprüche

1. Dichtungsmuffe (1) für einen Rohrverband (9, 9a, 9b) mit wenigstens zwei Innenrohren zum Aufnehmen von elektrischen Leitern, wie Kabeln, und einer flexiblen, die wenigstens zwei Innenrohre umgebenden Umhüllung, umfassend wenigstens zwei den Rohrverband umgreifende Muffenschalen (3), insbesondere Muffenhalbschalen (3a, 3b), die eine Einführöffnung (11) und eine Rohraustrittsöffnung (13) begrenzen, eine in Längsrichtung (L) der Dichtungsmuffe (1) geteilte Dichtmatte (5), eine Dichtungsscheibe (7) zum Abdichten der Rohraustrittsöffnung mit wenigstens zwei Durchgängen, von denen jeder ein Innenrohr unter Ausbildung einer umlaufenden geschlossenen Innenrohrdichtfläche aufnehmen kann, und eine außen an die Muffenschalen (3) anbringbare Klemmeinrichtung zum gegenseitigen Verspannen der Muffenschalen (3) und zum radialen Andrücken der Dichtmatte (5) gegen die Umhüllung des Rohrverbands (9, 9a, 9b), **dadurch gekennzeichnet, dass** die Dichtmatte (5) mehrere umlaufende, radial nach innen auf die Umhüllung erstreckende Ringwülste (51a, b, c, d) zum Abdichten der Einführöffnung (11) und zwischen zwei Ringwülsten (51a, b, c, d) eine umlaufende Ringnut (61a, b, c) formt, in die beim Verspannen die jeweiligen elastisch verformten Ringwülste (51a, b, c, d) ausweichen, so dass wenigstens eine umlaufende geschlossene Umhüllungsdichtfläche (53a, b, c, d) zwischen wenigstens einem Ringwulst (51a, b, c, d) und der Umhüllung gebildet ist, wobei die mehreren kreisförmigen Ringwülste (51a, b, c, d) zueinander unterschiedliche Radialabstände zur Mittelachse (A) aufweisen.

2. Dichtungsmuffe (1) nach Anspruch 1, **dadurch gekennzeichnet, dass** eine Anordnung aus drei oder vier Ringwülsten (51a, b, c, d) vorgesehen ist, die sich insbesondere von einer vorzugsweise zylindrischen Basisfläche (63a, b, c) der Ringnute (61a, b, c) radial nach innen erstrecken, wobei insbesondere sämtliche Basisflächen (63a, b, c) der Ringnute (61a, b, c) den gleichen Radialabstand (65a, b, c) zur Muffenachse (A) aufweisen.

3. Dichtungsmuffe (1) nach Anspruch 1 oder 2, **dadurch gekennzeichnet, dass** die mehreren Ringwülste (51a, b, c, d) im Querschnitt eine Kegelstumpfform aufweisen und/oder eine von der Basisfläche (63a, b, c) gemessene Radialhöhe (67a, b, c, d) von wenigstens 2 mm oder 3 mm, insbesondere zwischen 2 mm und 3 mm, aufweisen, wobei insbesondere eine Axialbreite eines Ringwulstes (51a, b, c, d) auf Höhe der Basisfläche (63a, b, c) im wesentlichen dessen Radialhöhe (67a, b, c, d) entspricht und/oder eine Axialbreite eines Ringwulstes (51,a, b, c, d) auf Höhe der Basisfläche (63a, b, c) größer als dessen Radialhöhe (67a, b, c, d) ist.

4. Dichtungsmuffe (1) nach einem der vorstehenden Ansprüche, **dadurch gekennzeichnet, dass** ein einführöffnungsnaher Ringwulst (51b) einen kleinsten Radialabstand und ein dichtungsscheibennaher Ringwulst (51a) einen größten Radialabstand aufweisen.

5. Dichtungsmuffe (1) nach einem der vorstehenden Ansprüche, **dadurch gekennzeichnet, dass** zwei benachbarte, insbesondere dichtungsscheibennahe Ringwülste (51a, 51b) im unverformten Zustand eine schmale zylindrische Umhüllungsdichtfläche (53a, b) von vorzugsweise weniger als 3mm Breite aufweisen und zwei benachbarte, insbesondere einführöffnungsnahe Ringwülste (51c, 51d) im unverformten Zustand eine breite zylindrische Umhüllungsdichtfläche (53c, 53d) aufweisen, an der wenigstens eine, vorzugsweise zwei, umlaufende Dichtnase (55) vorsteht.

6. Dichtungsmuffe (1) nach einem der vorstehenden Ansprüche, **dadurch gekennzeichnet, dass** die Dichtmatte (5) axial an einem dichtungsscheibennahen Ringwulst (51a) anschließend ein insbesondere zylindrischen Dichtscheibensitz (59) formt, in dem die Dichtungsscheibe (7) eingesetzt und verspannbar ist, wobei insbesondere der vorzugsweise zylindrische Dichtscheibensitz (59) einen größeren Radialabstand (66) als eine insbesondere zylindrische Basisfläche (63a, b, c) der Ringnute (61a, b, c) aufweist und/oder im gespannten Zustand eine geschlossene umlaufende Dichtscheibendichtfläche bildet und/oder axial durch den dichtungsscheibennahe Ringwulst (51a) und einen Radialinnenabsatz (33) der Muffenschalen (3) begrenzt ist.

7. Dichtungsmuffe (1) nach einem der vorstehenden Ansprüche, **dadurch gekennzeichnet, dass** die mehreren Ringwülste (51a, b, c, d) an einer radialen Teilungsfläche der Dichtmatte (5) im wesentlichen absatzfrei in einander übergehen, wobei der Querschnitt des jeweiligen Ringwulstes (51a, b, c, d) in Umfangsrichtung gleich bleibt.

8. Dichtungsmuffe (1) nach einem der vorstehenden Ansprüche, **dadurch gekennzeichnet, dass** die Dichtmatte (5) an deren Außenseite (35) mehrere ringförmige Vorsprünge (33) aufweist, die in entsprechend geformte Ringaussparungen (35) an der Innenseite der Muffenschalen (3) eingreifen.

## Claims

1. Sealing sleeve (1) for a pipe assembly (9, 9a, 9b) with at least two inner pipes for receiving electrical conductors, such as cables, and a flexible sheath, surrounding the at least two inner pipes, comprising at least two sleeve shells (3), more particularly sleeve half-shells (3a, 3b) which surround the pipe assembly and delimit an insertion opening (11) and a pipe outlet opening (13), a sealing mat (5) separated in the longitudinal direction (L) of the sealing sleeve (1), a sealing washer (7) for sealing the pipe outlet opening with at least two passages, each one of which can receive an inner pipe forming a circumferential, closed inner pipe sealing surface, and a clamping device that can be applied externally on the sleeve shells (3) for mutually clamping the sleeve shells (3), wherein the sealing mat (5) forms several circumferential annular protrusions (51 a, b, c, d) extending radially inwards to the sheath for sealing the inlet opening (11) and between two annular protrusions (51a, b, c, d) a circumferential annular groove (61a, b, c), **characterised in that** the clamping device presses the sealing mat (5) against the sheath of the pipe assembly (9, 9a, 9b), during clamping the respective elastically deformed annual protrusions (51a, b, c, d) move out of the way so that at least one circumferentially closed sheath sealing surface (53a, b, c, d) is formed between at least one annular protrusion (51a, b, c, d) and the sheath, wherein the several annular protrusions (51a, b, c, d) are at different radial distances from each other with regard to the middle axis (A).

2. Sealing sleeve (1) according to claim 1 **characterised in that** an arrangement of three or four annular protrusions (51a, b, c, d) is provided, which in particular extend radially inwards from a preferably cylindrical base area (63a, b, c) of the annular groove (61a, b, c), wherein, in particular, all base areas (63a, b, c) of the annular groove (61a, b, c) exhibit the same radial distance (65a, b, c) to the sleeve axis (A).

3. Sealing sleeve (1) according to claim 1 or 2 **characterised in that** the several annular protrusions (51a, b, c, d) are of a truncated cone shape in cross-section and/or have a radial height (67a, b, c, d) measured from the base area (63a, b, c) of at least 2 mm or 3 mm, in particular between 2 mm and 3 mm, wherein in particular an axial width of an annular protrusion (51a, b, c, d) at the base area (63a, b, c) essentially corresponds to its radial height (67a, b, c, d) and/or an axial width of an annular protrusion (51 a, b, c, d) at the base area (63a, b, c,) is greater than its radial height (67a, b, c, d).

4. Sealing sleeve (1) according to any one of the preceding claims **characterised in that** a radial protrusion (51b) close to the insertion opening has a smallest radial distance and an annular protrusion (51a) close to the sealing washer has a largest radial distance.

5. Sealing sleeve (1) according to any one of the preceding claims **characterised in that** two adjacent annual protrusions (51a, 51b), in particular ones that are close to the sealing washer, in the undeformed state have a narrow cylindrical sheath sealing area (53a, b) of preferably less than 3 mm width and two adjacent annular protrusions (51c, 51d) in particular ones that are close to the insertion opening, in the undeformed state have a broad cylindrical sheath sealing area (53c, 53d), on which one, preferably two, circumferential sealing lug(s) (55) project(s).

6. Sealing sleeve (1) according to any one of the preceding claims **characterised in that** the sealing mat (5) then forms, on an annular protrusion (51a) close to the sealing washer, an in particular cylindrical sealing washer seat (59) into which the sealing washer (7) can be inserted and clamped, wherein, in particular, the preferably cylindrical sealing washer seat (59) has a larger radial distance (66) than an, in particular, cylindrical base area (63a, b, c) of the annular groove (61a, b, c) and/or in the clamped state forms an closed circumferential sealing washer sealing area and/or is axially delimited by the annular protrusion (51a) close to the sealing washer and a radial inner ledge (33) of the sleeve shells (3).

7. Sealing sleeve (1) according to any one of the preceding claims **characterised in that** at a radial partition area of the sealing mat (5) the several annular protrusions (51a, b, c, d) merge into each other essentially without ledges, wherein the cross-section of the respective annular protrusion (51a, b, c, d) remains the same in the circumferential direction.

8. Sealing sleeve (1) according to any one of the preceding claims **characterised in that** the sealing mat (5) on its outer side (35) has several annular projections (33) which engage in correspondingly formed annular recesses (35) on the inner side of the sleeve shells (3).

## Revendications

1. Manchon d'étanchéité (1) pour une canalisation de raccordement tubulaire (9, 9a, 9b) avec au moins deux tubes intérieurs destinés à recevoir des conducteurs électriques, comme des câbles et une enveloppe flexible entourant au moins deux tubes intérieurs, comprenant au moins deux coques de manchon (3) enserrant la canalisation de raccordement tubulaire, en particulier des demi-coques de manchon (3a, 3b), qui délimitent une ouverture d'introduction (11) et une ouverture de sortie tubulaire (13), une masse d'étanchéité (5) divisée dans le sens longitudinal (L) du manchon d'étanchéité (1), une rondelle d'étanchéité (7) pour étanchéifier l'ouverture de sortie tubulaire avec au moins deux passages, dont chacun peut recevoir un tube intérieur en formant une surface d'étanchéité tubulaire intérieure périphérique fermée et un système de serrage pouvant être monté extérieurement sur les coques de manchon (3) pour le serrage réciproque des coques de manchon (3) et pour la pression radiale de la masse d'étanchéité (5) contre l'enveloppe du raccord tubulaire (9, 9a, 9b), **caractérisé en ce que** la masse d'étanchéité (5) forme plusieurs bourrelets annulaires (51a, b, c, d) périphériques, s'étirant radialement vers l'intérieur sur l'enveloppe pour étanchéifier l'ouverture d'introduction (11) et forme entre deux bourrelets annulaires (51a, b, c, d), une rainure annulaire (61a, b, c) périphérique dans laquelle s'écartent les bourrelets annulaires (51a, b, c, d) respectifs élastiquement déformés lors du serrage de telle manière qu'au moins une surface d'étanchéité d'enveloppe (53a, b, c, d) périphérique fermée est formée entre au moins un bourrelet annulaire (51a, b, c, d) et l'enveloppe, sachant que plusieurs bourrelets annulaires circulaires (51a, b, c, d) comportent des distances radiales différentes entre eux par rapport à l'axe médian (A).

2. Manchon d'étanchéité (1) selon la revendication 1, **caractérisé en ce qu'**un système de deux ou quatre bourrelets annulaires (51a, b, c, d) est prévu, qui s'étendent en particulier d'une surface de base (63a, b, c) de préférence cylindrique des rainures annulaires (61a, b, c), sachant en particulier que toutes les surfaces de base (63a, b, c) des rainures annulaires (61a, b, c) comportent la même distance radiale (65a, b, c) par rapport à l'axe de manchon (A).

3. Manchon d'étanchéité (1) selon la revendication 1 ou 2, **caractérisé en ce que** plusieurs bourrelets annulaires (51a, b, c, d) comportent une forme tronconique en section et/ou comportent une hauteur radiale (67a, b, c, d) mesurée depuis la surface de base (63a, b, c) d'au moins 2 mm ou 3 mm, en particulier entre 2 mm et 3 mm, sachant en particulier qu'une largeur axiale d'un bourrelet annulaire (51a, b, c, d) correspond à hauteur de la surface de base (63a, b, c) pour l'essentiel à la hauteur radiale (67a, b, c, d) de celui-ci et/ou une largeur axiale d'un bourrelet annulaire (51a, b, c, d) à hauteur de la surface de base (63a, b, c) est plus grande que la hauteur radiale (67a, b, c, d) de celui-ci.

4. Manchon d'étanchéité (1) selon l'une quelconque des revendications précédentes, **caractérisé en ce qu'**un bourrelet annulaire (51b) proche de l'ouverture d'introduction comporte une distance radiale minimale et un bourrelet annulaire (51a) proche de la rondelle d'étanchéité comporte une distance radiale maximale.

5. Manchon d'étanchéité (1) selon l'une quelconque des revendications précédentes, **caractérisé en ce que** deux bourrelets annulaires (51a, 51b) voisins, en particulier proches de la rondelle d'étanchéité, comportent à l'état non déformé une surface d'étanchéité d'enveloppe cylindrique étroite (53a, b) de préférence de moins de 3 mm de largeur et deux bourrelets annulaires (51c, 51d) voisins, en particulier proches de l'ouverture d'introduction, comportent à l'état non déformé une surface d'étanchéité d'enveloppe cylindrique large (53c, 53d) sur laquelle vient dépasser au moins un collet d'étanchéité (55) périphérique, de préférence deux.

6. Manchon d'étanchéité (1) selon l'une quelconque des revendications précédentes, **caractérisé en ce que** la masse d'étanchéité (5) forme ensuite axialement sur un bourrelet annulaire (51a) proche de la rondelle d'étanchéité un siège de rondelle d'étanchéité (59) en particulier cylindrique dans lequel la rondelle d'étanchéité (7) est insérée et peut être serrée, sachant en particulier que le siège de rondelle d'étanchéité (59) de préférence cylindrique comporte une distance radiale (66) plus grande qu'une surface de base (63a, b, c) en particulier cylindrique des rainures annulaires(61a, b, c) et/ou forme à l'état serré une surface d'étanchéité de rondelle d'étanchéité périphérique fermée et/ou est axialement délimitée par le bourrelet annulaire (51a) proche de la rondelle d'étanchéité et un épaulement intérieur radial (33) des coques de manchon (3).

7. Manchon d'étanchéité (1) selon l'une quelconque des revendications précédentes, **caractérisé en ce que** plusieurs bourrelets annulaires (51a, b, c, d) passent pour l'essentiel sans épaulement l'un dans l'autre sur une surface de séparation radiale de la masse d'étanchéité (5), sachant que la section du bourrelet annulaire respectif (51a, b, c, d) reste identique dans le sens périphérique.

8. Manchon d'étanchéité (1) selon l'une quelconque des revendications précédentes, **caractérisé en ce que** la masse d'étanchéité (5) comporte sur sa face extérieure (35) plusieurs saillies annulaires (33), qui viennent en prise dans des évidements annulaires formés de façon correspondante (35) sur la face intérieure des coques de manchon (3).
